# EUROPÄISCHE PATENTSCHRIFT

(11) **EP 3 417 694 B1**
(45) Veröffentlichungstag und Bekanntmachung des Hinweises auf die Patenterteilung: **13.05.2020**
(21) Anmeldenummer: 18177313.6
(22) Anmeldetag: 12.06.2018
(51) Int. Cl.: A01D 61/00

(54) **DRAPER-SCHNEIDWERK MIT MEHRTEILIGER FÖRDERSCHNECKE**
DRAPER HEADER WITH MULTI-PART CONVEYING SCREW
BARRE DE COUPE AVEC CONVOYEUR À BANDE ET VIS TRANSPORTEUSE EN PLUSIEURS PIÈCES

(30) Priorität: 21.06.2017 DE 102017113775
(43) Veröffentlichungstag der Anmeldung: 26.12.2018
(73) Patentinhaber: Carl Geringhoff GmbH & Co. KG, 59227 Ahlen (DE)
(72) Erfinder: SCHULZE SELTING, Stephan, 59320 Enningerloh (DE); SUDHUES, Steffen, 59227 Ahlen (DE); SCHULZE RÜCKAMP, Jan, 59320 Enningerloh (DE); HARTMANN, Christoph, 59065 Hamm (DE); WEBERMANN, Dirk, 48308 Senden (DE); BRINKMANN, Martin, 48341 Altenberge (DE)
(74) Vertreter: Weeg, Thomas

(56) Entgegenhaltungen:
- EP-A1- 2 422 607
- EP-A1- 2 520 154
- EP-A1- 3 286 999
- EP-A2- 2 710 879
- DE-A1-102011 116 341
- DE-A1-102014 009 159
- US-A- 4 487 004
- US-A- 4 956 966
- US-A1- 2017 208 738

## Beschreibung

Die vorliegende Erfindung bezieht sich auf ein Schneidwerk zum Anbau an einen Mähdrescher mit einem dreiteiligen Rahmen, dessen Rahmenteile gelenkig miteinander verbunden sind, einem Messerbalken, einer Haspel, einer mittigen Bandfördervorrichtung und seitlichen Bandfördervorrichtungen zum Abfördern des geschnittenen Halmguts, die am Rahmen abgestützt sind, wobei die seitlichen Bandfördervorrichtungen quer zur Vorfahrtrichtung auf die mittige Bandfördervorrichtung zu und die mittige Bandfördervorrichtung entgegen der Vorfahrtrichtung fördern, einer mehrteiligen Rückwand des Schneidwerks, die an den Rahmenteilen des Rahmens ausgebildet ist, die sich entlang der Förderstrecke der seitlichen Bandfördervorrichtungen erstreckt und die im Bereich der mittigen Bandfördervorrichtung eine Übergabeöffnung zur Übergabe des Ernteguts an den Mähdrescher aufweist, und Antriebsvorrichtungen zum Antrieb des Messerbalkens und der Bandfördervorrichtungen.

Aus der Schrift DE 10 2014 009 159 A1 ist es bekannt, ein gattungsgemäßes Draper-Schneidwerk dreiteilig aufzubauen mit einem mittigen Rahmen und zwei seitlichen Rahmen, die im Verhältnis zum mittigen Rahmen beweglich sind.

Aus der Schrift US 4,956,966 ist ein herkömmliches Draper-Schneidwerk bekannt, bei dem geschnittenes Erntegut von den seitlichen Bandfördervorrichtungen zur mittigen Bandfördervorrichtung und von dieser in den Annahmebereich eines Schrägförderers eines Mähdreschers befördert wird. Zur Unterstützung der Gutübergabe von der mittigen Bandfördervorrichtung an dem Schrägförderer ist in der Schrift US 4,956,966 eine Förderwalze im Bereich der Übergabeöffnung angeordnet, die Schneckenbleche aufweist, die das Erntegut bei einer Rotationsbewegung der Förderwalze in den Schrägförderer schieben.

In derartigen Draper-Schneidwerken kann sich bei Erntegut mit einem hohen Strohanteil, wie beispielsweise Raps, nahe der Rückwand Erntegut ansammeln, das von den Bandfördervorrichtungen nicht mehr abtransportiert wird und das sich dann zu kompakten Paketen aufbaut, die nur manuell bei einer Unterbrechung des Erntevorgangs entfernt werden können.

Aus der einleitenden Beschreibung der Schrift EP 2 520 154 A1 ist es für ein Schneidwerk mit einem starren einteiligen Rahmen bekannt, ein gattungsgemäßes Draper-Schneidwerk mit einer Förderschnecke zu versehen, die oberhalb der Bandfördervorrichtungen angeordnet ist. Dort wird eine derartige Förderschnecke jedoch als nachteilig beschrieben. Stattdessen wird vorgeschlagen, Pressrollen mit einer glatten Umfangsfläche zu verwenden, die oberhalb der seitlichen Bandfördervorrichtungen angeordnet sind und sich entlang deren Länge erstrecken.

Aus der Schrift DE 10 2011 116341 A1 ist ein Schneidwerk nach dem Oberbegriff des Anspruchs 1 bekannt.

Es ist die Aufgabe der vorliegenden Erfindung, eine Vorrichtung zu schaffen, die einen Materialaufbau von Erntegut im Bereich der Rückwand der seitlichen Bandfördervorrichtungen verhindert.

Die Aufgabe wird für eine gattungsgemäßes Schneidwerk gelöst, indem im Bereich der Rückwand eine dreiteilige Förderschnecke angeordnet ist, die sich über die Arbeitsbreite des Schneidwerks erstreckt und die oberhalb der mittigen und der seitlichen Bandfördervorrichtungen und zwischen der Haspel und der Rückwand angeordnet ist, wobei die Längenmaße der jeweiligen Teile der Förderschnecke zumindest annähernd den Breitenmaßen der Rahmenteile des Rahmens entsprechen, die Förderschneckenteile von einem gemeinsamen Antrieb angetrieben und die einander angrenzenden Teile der Förderschnecke durch Kreuzgelenke miteinander verbunden sind.

Durch die dreiteilige Ausführung der Förderschnecke ergibt sich eine eindeutige und auch bei Schwenkbewegungen der Rahmenteile gleich bleibende räumliche Zuordnung der einzelnen Teile der Förderschnecke zu ihrem jeweiligen Rahmenteil und dem zugehörigen Teil der Rückwand. Dies ist funktionsmäßig von Bedeutung, weil sich dann auch bei Schwenkbewegungen der Rahmenteile zueinander zwischen dem Hüllkreis des betreffenden Förderschneckenteils und dem zugehörigen Rückwandteil keine veränderlichen Abstände ergeben, in denen sich Erntegut festsetzen und zu Materialpaketen aufbauen kann. Für ein Rahmenteil bleibt die räumliche Zuordnung des entsprechenden Teils der Förderschnecke bei Schwenkbewegungen der Rahmenteile zumindest annähernd gleich. Indem die Längenmaße der jeweiligen Teile der Förderschnecke zumindest annähernd den Breitenmaßen der Rahmenteile des Rahmens entsprechen, ergeben sich auch bei Schwenkbewegungen der Rahmenteile zueinander je nach Schwenkstellung keine oder allenfalls geringe Längendifferenzen, die über entsprechende Lager auf eine einfache und kostengünstige Weise ausgeglichen werden können.

Wenn auch die Haspel dreiteilig aufgebaut ist und die Breiten der Haspelteile zumindest annähernd den Breitenmaßen der zugehörigen Rahmenteile und der Länge der zugehörigen Teile der Förderschnecke entsprechen, ergibt sich auch eine gleich bleibende räumliche Zuordnung der Förderschnecke zur Haspel. Die Förderschnecke kann durch die auf ihr angeordneten Schneckenbleche mit ihrer Drehbewegung an der Haspel anhaftendes Erntegut abstreifen. Dadurch wird ein Wickeln des anhaftenden Ernteguts an der Haspel sowie ein unerwünschtes Mitnehmen des Ernteguts wieder nach vorne, wo es die Gutannahme und Ablage auf den Bandfördervorrichtungen stören könnte, vermieden. Wenn die Förderschnecke und die Haspel auch bei Schwenkbewegungen der Rahmenteile zueinander eine definierte räumliche Zuordnung beibehalten, können die Hüllkreise der Haspel und der Förderschnecke so dicht aneinander angrenzend ausgeführt werden, dass sich eine besonders effektive Abstreifwirkung ergibt.

Nach einer Ausgestaltung der Erfindung ist der mittige Teil der Förderschnecke fest mit dem mittigen Rahmenteil verbunden. Durch die feste Verbindung des mittigen Teils der Förderschnecke mit dem mittigen Rahmenteil ergibt sich auch für die seitlichen Förderschneckenteile eine feste Bezugsgröße, wenn die seitlichen Rahmenteile verschwenken. Relativbewegungen, die sich bei Schwenkbewegungen der äußeren Rahmenteile ergeben, können von den äußeren Förderschneckenteilen aufgenommen und ausgeglichen werden.

Nach einer Ausgestaltung der Erfindung sind die seitlichen Teile der Förderschnecke an einem Punkt mit dem jeweils zugehörigen seitlichen Rahmenteil verbunden. Durch die punktuelle Verbindung des jeweiligen Teils der Förderschnecke mit dem zugehörigen Rahmenteil ergeben sich eine Anzahl konstruktiver und funktioneller Vorteile. Die punktuelle Verbindung ermöglicht eine außerhalb der punktuellen Verbindung eingeschränkte relative Beweglichkeit der Förderschneckenteile zum jeweiligen Rahmenteil, insbesondere, wenn sich die punktuelle Verbindung an einem Ende der Förderschnecke befindet und das andere Ende räumlich verlagerbar sein soll. Dadurch ergibt sich gleichwohl eine ausreichend genaue räumliche Zuordnung zur Rückwand und der Haspel.

Nach einer Ausgestaltung der Erfindung sind die seitlichen Teile der Förderschnecke an ihren äußeren Enden in einer Gleitlagerung als ein Verbindungspunkt mit dem jeweils zugehörigen Rahmenteil verbunden, wobei die Gleitlagerung so ausgestaltet ist, dass sie auch eine rotatorische Bewegung des jeweiligen Förderschneckenteils zulässt, und die seitlichen Teile der Förderschnecke sind an ihrem dem mittigen Rahmenteil zugewandten Ende drehfest mit dem mittigen Teil der Förderschnecke verbunden. Die Gleitlagerung erlaubt entlang der Längsachse der Förderschnecke eine translatorische Bewegung, die sich aus der Verschwenkbewegung der Rahmenteile zueinander ergeben kann. Zugleich lässt die punktuelle Verbindung als Gleitlagerung auch eine rotatorische Bewegung der Förderschnecke zu. Durch die drehfeste Verbindung der seitlichen Förderschneckenteile an ihrem entgegengesetzten Ende mit dem mittigen Förderschneckenteil können Antriebskräfte gut übertragen werden. In Verbindung mit den Kreuzgelenken ergibt sich ein flexibler Antriebsstrang, der die Beweglichkeit der Rahmenteile zueinander in keiner Weise einschränkt, auch wenn sich die Kreuzgelenke in einem Abstand zu den Drehachsen befinden, um die die Rahmenteile schwenken.

Nach einer Ausgestaltung der Erfindung sind an dem jeweiligen Rahmenteil Abstreifer angeordnet, die auf den Hüllkreis der Schneckenbleche der Förderschneckenteile hin ausgerichtet sind. Abstreifer können an einem rotierenden Bauteil anhaftendes Erntegut nur dann sicher abstreifen, wenn der Abstreifer einen direkten Kontakt zur abzustreifenden Fläche oder zumindest einen davon nur sehr geringfügigen Abstand von maximal wenigen Millimetern hat. Wenn der jeweilige Teil der Förderschnecke und der zugehörige Abstreifer beide fest mit dem zugehörigen Rahmenteil verbunden sind, ergibt sich eine von Schwenkbewegungen der Rahmenteile zueinander unabhängige und unter allen Erntebedingungen zuverlässige Abstreifwirkung.

Nach einer Ausgestaltung der Erfindung treibt der Antrieb der Förderschnecke den mittigen Teil der Förderschnecke an. Bei einem auf den mittigen Teil der Förderschnecke wirkenden Antrieb können die entsprechenden Antriebskomponenten benachbart zum Schrägförderer des Mähdreschers angeordnet werden. Dadurch befindet sich das Gewicht des Antriebs annähernd in der Maschinenmitte. Anders als bei einem Antrieb über die Außenseiten des Schneidwerks sind die auf den Rahmen einwirkenden Gewichts- und Hebelkräfte geringer, und die Antriebskräfte müssen nicht erst nach außen geführt werden. Die Außenseiten des Schneidwerks können schlanker ausgeführt werden, wenn dort keine zusätzlichen Antriebskomponenten verbaut sind. Durch den mittig erfolgenden Antrieb können die Schneckenbleche der Förderschnecke bis an die äußeren Seitenteile des Schneidwerks herangeführt werden. So werden Toträume im äußeren Bereich des Schneidwerks vermieden, in denen die Förderschnecke durch Antriebskomponenten daran gehindert ist, ihre Funktion über die volle Arbeitsbreite des Schneidwerks zu entfalten.

Der Antrieb kann als ein hydraulischer oder mechanischer Antrieb ausgeführt werden. Für einen hydraulischen Antrieb sitzen die Anschlussventile zur Arbeitshydraulik des Mähdreschers am Schrägförderer in direkter Nachbarschaft, so dass nur kurze Anschlussleitungen erforderlich sind. Ein mechanischer Abtrieb könnte mit geringem baulichen Aufwand vom ebenfalls benachbart angeordneten Drapereingangsgetriebe abgezweigt werden. Die Schnittstellen für hydraulische und mechanische Antriebe befinden sich am Schrägförderer, so dass zur Übertragung der Antriebskraft von den Schnittstellen zum mittigen Teil der Förderschnecke nur kurze Wege überwunden werden müssen. Wenn der mittige Teil der Förderschnecke ortsfest mit dem mittigen Rahmenteil des Schneidwerks verbunden ist, sind die Wege zur Übertragung der Antriebskraft nicht veränderlich, wenn das mittige Rahmenteil ebenfalls ortsfest mit dem Schrägförderer des Mähdreschers verbunden ist. Die Beweglichkeit der Rahmenteile zueinander hat auf den Antriebsstrang zum mittigen Teil der Förderschnecke keine Auswirkungen.

Nach einer Ausgestaltung der Erfindung sind die Förderschneckenteile an ihrem jeweiligen Rahmenteil oder der jeweiligen Rückwand befestigt. Insbesondere dann, wenn die Tragelemente, die den Messerbalken und/oder die Führungs- und Antriebsteile der Bandfördervorrichtungen tragen, relativ zum Rahmen und/oder der Rückwand beweglich sind, bewirkt eine Befestigung der Förderschneckenteile am Rahmen oder der Rückwand, dass die Förderschneckenteile die Bewegungen solcher Tragelemente nicht mitmachen. Dadurch ist der Antrieb der Förderschnecke vereinfacht möglich, und die Funktion ist unabhängig von der Verschwenkung der Tragelemente und der Rahmenteile zueinander betriebssicherer.

Nach einer Ausgestaltung der Erfindung weisen die Schneckenbleche auf einem Abschnitt des mittigen Förderschneckenteils eine größere Steigung auf als Schneckenbleche auf einem Abschnitt der seitlichen Förderschneckenteile. Die größere Steigung der Schneckenbleche auf dem mittigen Förderschneckenteil bewirkt eine schnellere Abförderung des von der Förderschnecke beförderten Ernteguts. Die schnellere Abförderung verbessert die Abnahme des Ernteguts, das von den seitlichen Förderschneckenteilen bis an das mittige Förderschneckenteil heranbefördert worden ist.

Nach einer Ausgestaltung der Erfindung ist im Bereich der Kreuzgelenke ein die Kreuzgelenke überdeckender Konus auf die Förderschnecke aufgesetzt. Der Konus verbessert den Materialfluss im Bereich des Übergangs vom seitlichen Förderschneckenteil auf den mittigen Förderschneckenteil. Durch die sich in Förderrichtung des Ernteguts aufweitende Konusform wird das Erntegut auch um Antriebsteile und Halterungen der Förderschnecke herumgeleitet.

Nach einer Ausgestaltung der Erfindung sind die Förderschneckenteile im Anbindungsbereich zueinander über durch ein Kreuzgelenk miteinander verbundene Wellenstummel drehfest miteinander verbunden. Die Wellenstummel können als Schiebestifte ausgebildet sein, die jeweils auf eine Profilwelle aufgeschoben sind, oder ein Wellenstummel ist drehfest mit einem Förderschneckenteil verbunden, beispielsweise fest verschweißt, und der andere Wellenstummel ist auf eine Profilwelle aufgeschoben. Die Wellenstummel beziehungsweise Schiebestifte erlauben eine einfache Montage und Demontage der Förderschnecke. Zur Montage des mittigen Förderschneckenteils wird dieses mit den Lagern, die mit dem mittigen Rahmenteil verbunden sind, fluchtend vorgehalten. Sodann können Schiebestifte von der Seite her durch die Lager in die Profilwellen des mittigen Förderschneckenteils eingeschoben werden. Damit ist das mittige Förderschneckenteil ortsfest, aber drehbar montiert. Danach müssen nur noch die seitlichen Förderschneckenteile mit ihrer jeweiligen Profilwelle auf die freien Schiebestifte aufgeschoben und mit ihrem anderen Ende in das jeweilige Gleitlager am äußeren Rand des Schneidwerks eingelegt und befestigt werden. Die Demontage erfolgt in umgekehrter Richtung. Durch die geteilte Konstruktion und einfache Lagerung und Verbindung kann eine Förderschnecke schnell und einfach von 2 Personen ohne weiteres Lasthebegerät montiert und demontiert werden.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg oben auf ein Schneidwerk,
- Fig. 2:: eine Ansicht auf ein Schneidwerk von vorne,
- Fig. 3:: eine Schnittansicht auf ein Schneidwerk von der Seite,
- Fig. 4:: eine Teilansicht auf den Bereich des Antriebs der Förderschnecke,
- Fig. 5:: eine Schnittansicht des in Fig. 4 gezeigten Antriebsbereichs,
- Fig. 6:: eine Teilansicht auf den Anschlussbereich des mittigen Förderschneckenteils an den seitlichen Förderschneckenteil,
- Fig. 7:: eine Ansicht auf die Gleitlagerung eines seitlichen Förderschneckenteils, und
- Fig. 8:: eine Schnittansicht auf einen Abstreifer.

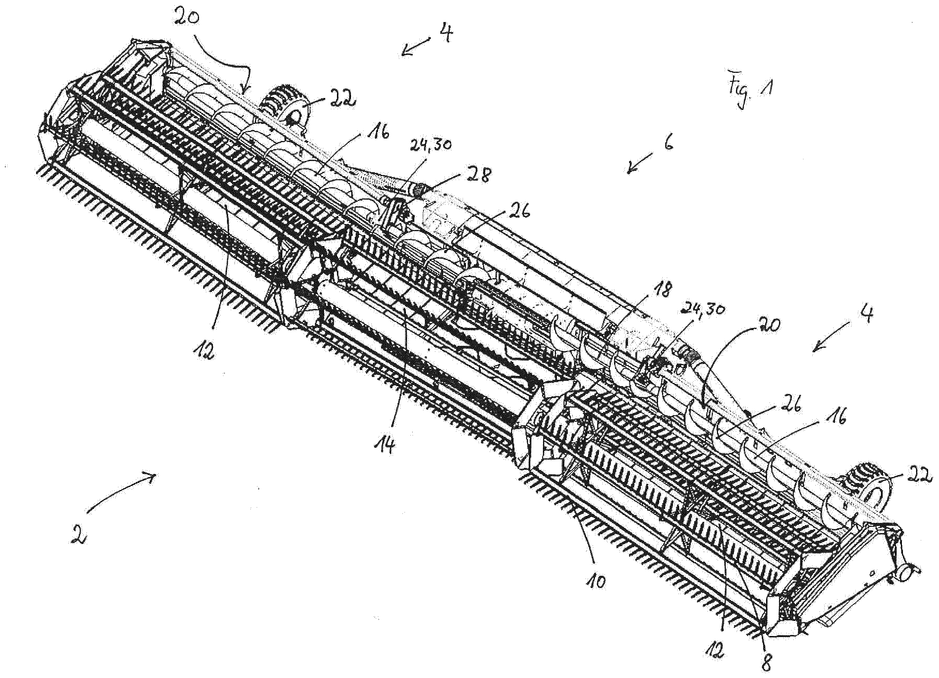

In Fig. 1 ist eine Ansicht von schräg oben auf ein Schneidwerk 2 gezeigt. Das Schneidwerk 2 verfügt über einen dreiteiligen Rahmen, der aus zwei seitlichen Rahmenteilen 4 und einem mittigen Rahmenteil 6 zusammengesetzt ist. In Fahrtrichtung gesehen vorne am Schneidwerk 2 befindet sich ein Messerbalken 10. Über dem Messerbalken 10 befindet sich die im Ausführungsbeispiel dreiteilige Haspel 8. Das vom Messerbalken 10 geschnittene Erntegut wird von der Haspel 8 auf die beiden seitlichen Bandfördervorrichtungen 12 sowie auf die mittige Bandfördervorrichtung 14 abgeworfen. Die beiden seitlichen Bandfördervorrichtungen 12 fördern das Erntegut quer zur Vorfahrtrichtung auf die mittige Bandfördervorrichtung 14, die das Erntegut entgegen der Vorfahrtrichtung nach hinten an den sich an das Schneidwerk anschließenden Schrägförderer eines Mähdreschers abgibt.

Im hinteren Bereich des Schneidwerks 2 befindet sich eine Rückwand 20, die an den jeweiligen Rahmenteilen 4, 6 ausgebildet ist und sich entlang der Förderstrecke des Ernteguts über die Bandfördervorrichtungen 12, 14 erstreckt. Die Rückwand 20 ist mit Ausnahme einer Übergabeöffnung zur Übergabe des Ernteguts an den Mähdrescher geschlossen ausgebildet, genau oder annähernd vertikal ausgerichtet und ragt deutlich über die Oberseite der Bandfördervorrichtungen 12, 14 hervor.

Im Bereich der Rückwand 20, und zwar oberhalb der mittigen und der seitlichen Bandfördervorrichtungen 12, 14 und zwischen der Haspel 8 und der Rückwand 20 befindet sich eine Förderschnecke, die aus zwei seitlichen Förderschneckenteilen 16 und einem mittigen Förderschneckenteil 18 zusammengesetzt ist. Die Förderschneckenteile 16, 18 verfügen über Schneckenbleche 26, mit denen bei einer Drehung der Förderschnecke Stroh in Querrichtung auf die Übergabeöffnung zu abgefördert werden kann.

Die seitlichen Rahmenteile 4 sind durch Stützräder 22 auf dem Boden abgestützt. Da der mittige Rahmenteil 6 vom Schrägförderer des Mähdreschers getragen wird und in seiner Arbeitshöhe über eine Höhenverstellung des Schrägförderers verstellt werden kann, können die seitlichen Rahmenteile 4 über eine jeweilige gelenkige Verbindung zum mittigen Rahmenteil 6 um die sich in Fahrtrichtung weisende Schwenkachse je nach Bodenkontur nach oben oder unten verschwenken. Die Höhenverschwenkung wird über die Stützräder 22 gesteuert, die der Bodenkontur folgen. Die Stützräder 22 können höhenverstellbar ausgebildet sein.

Durch die Verschwenkbarkeit der seitlichen Rahmenteile 4 im Verhältnis zum mittigen Rahmenteil 6 ist es erforderlich, dass bei Schwenkbewegungen der seitlichen Rahmenteile 4 auch die Förderschnecke die entsprechenden Bewegungen der seitlichen Rahmenteile 4 nachvollziehen kann. Durch die Dreiteilung der Förderschnecke in zwei seitliche Förderschneckenteile 14 und ein mittleres Förderschneckenteil 18 können im Teilungsbereich Kreuzgelenke 24 angeordnet sein, die die seitlichen Förderschneckenteile 16 mit dem mittleren Förderschneckenteil 18 drehfest verbinden und eine Antriebskraft auf das mitlaufende Förderschneckenteil 16, 18 übertragen. Durch die im Teilungsbereich angeordneten Kreuzgelenke 24 können die einzelnen Förderschneckenteil 16, 18 zusammen mit den zugehörigen Rahmenteilen 4, 6 verschwenken.

Im Ausführungsbeispiel sind die Förderschneckenteile 16, 18 in ihrer Länge auf die Arbeitsbreite der Rahmenteile 4, 6 abgestimmt. Bei Schwenkbewegungen der seitlichen Rahmenteile 4 zum mittigen Rahmenteil 6 werden dadurch Überlappungen vermieden, die wegen unterschiedlicher Schwenkradien konstruktiv schwer beherrschbar sind.

Im Ausführungsbeispiel wird die Förderschnecke über das mittlere Förderschneckenteil 18 angetrieben. Dazu ist am mittigen Rahmenteil 6 ein Antrieb 28 angebracht, der eine Antriebskraft von einem Hydromotor über eine Getriebestufe auf den mittleren Förderschneckenteil 18 überträgt.

In Fig. 1 sind die Kreuzgelenke 24 jeweils von einem Konus 30 verdeckt. Der Konus 30 schützt das Kreuzgelenk vor Verschmutzung und unterstützt die Überleitung des Ernteguts von einem seitlichen Förderschneckenteil 16 auf den mittleren Förderschneckenteil 18.

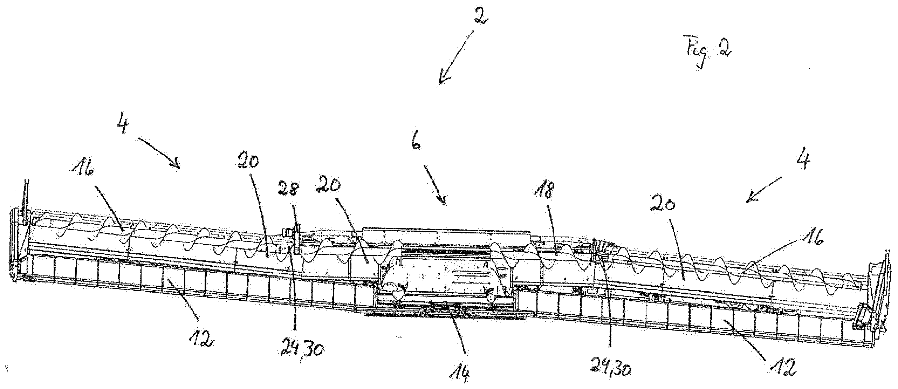

In Fig. 2 ist eine Ansicht auf ein Schneidwerk 2 aus einer Ansicht von vorne gezeigt. In dieser Ansicht ist die Haspel 8 weggelassen worden. In der in Fig. 2 gezeigten Ansicht ist erkennbar, dass die seitlichen Rahmenteile 4 im Verhältnis zum mittigen Rahmenteil 6 verschwenkt sind. Aus der Ansicht von vorne ist erkennbar, dass die Längen der Förderschneckenteile 16, 18 an die Breiten der jeweiligen Rahmenteile 4, 6 angepasst sind. Auch sind in dieser Ansicht gut die seitlichen Bandfördervorrichtungen 12 sowie die mittige Bandfördervorrichtung 14 erkennbar. Auch die dreiteilige Rückwand 20 ist in dieser Ansicht gut erkennbar. Die Kreuzgelenke 24 mit dem jeweiligen Konus 30 befinden sich im Übergangsbereich zwischen den seitlichen Rahmenteilen 4 zum mittigen Rahmenteil 6. Auch der Antrieb 28 ist gut erkennbar.

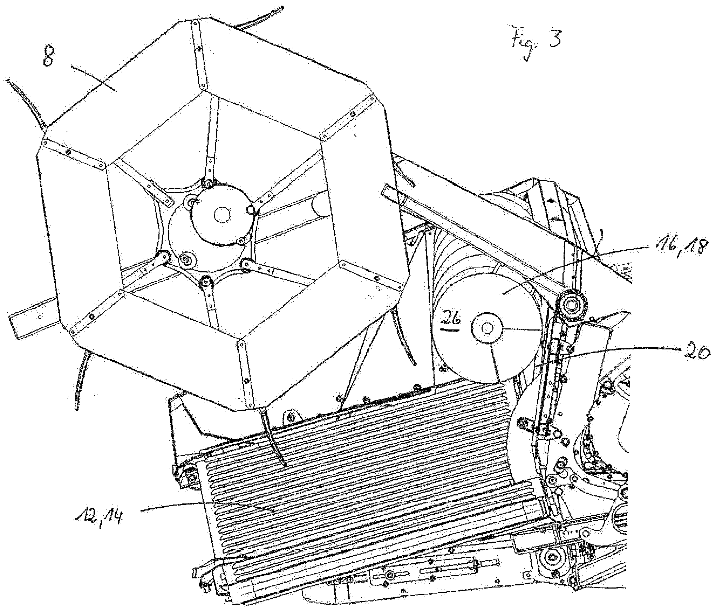

Die Fig. 3 zeigt eine Schnittansicht auf ein Schneidwerk 2 von der Seite. In der Seitenansicht ist das räumliche Zuordnungsverhältnis zwischen der Haspel 8, den Förderschneckenteilen 16, 18, der Rückwand 20 sowie den Bandfördervorrichtungen 12, 14 gut erkennbar. Die Förderschneckenteile 16, 18 sind im Bereich der Rückwand 20 oberhalb der mittigen und der seitlichen Bandfördervorrichtung 12, 14 und zwischen der Haspel 8 und der Rückwand 20 angeordnet. Die Förderschneckenteile 16, 18 lassen keinen Zwischenraum mehr zwischen ihren Schneckenblechen 26 und der Rückwand 20. Die Schneckenbleche 26 befinden sich auch dicht an dem Hüllkreis der Zinken der Haspel 8, so dass die Schneckenbleche 26 auch die an den Zinken anhaftenden Strohanteile abstreifen und abfördern können.

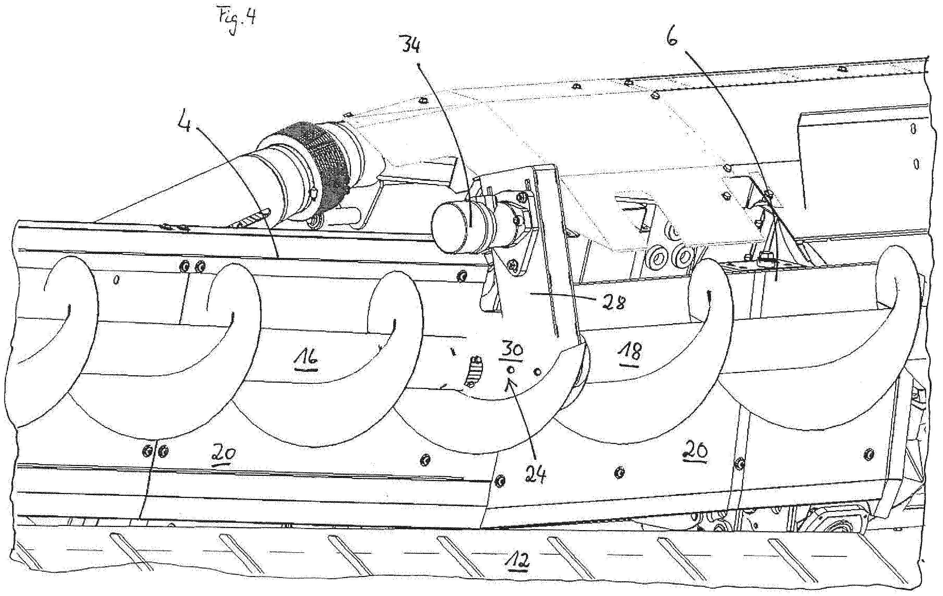

In Fig. 4 ist eine Teilansicht auf den Bereich des Antriebs 28 auf das mittleren Förderschneckenteil 18 gezeigt. Im Ausführungsbeispiel wird der Antrieb 28 von einem Hydromotor 34 angetrieben. Dieser wirkt auf den mittleren Förderschneckenteil 18.

Über ein sich unter dem Konus 30 verbergendes Kreuzgelenk 24 wird die Antriebskraft vom Antrieb 28 vom mittleren Förderschneckenteil 18 auf den seitlichen Förderschneckenteil 16 übertragen.

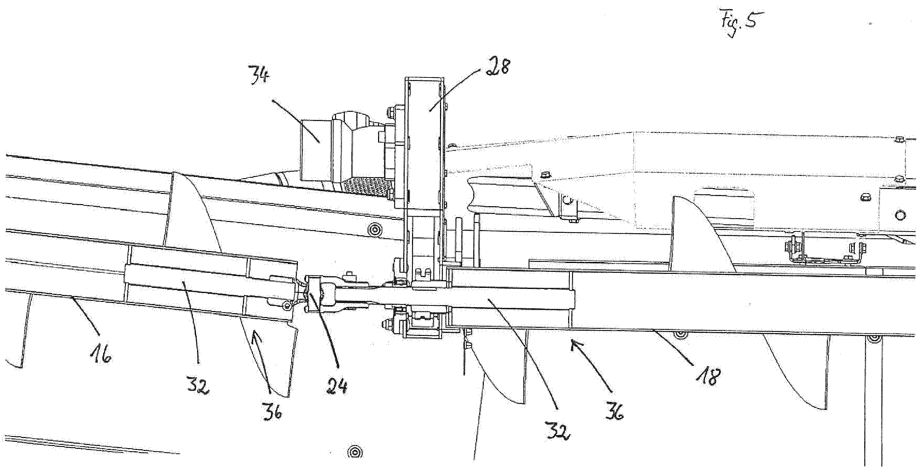

In Fig. 5 ist eine Schnittansicht des in Fig. 4 gezeigten Antriebsbereichs gezeigt. In dieser Schnittansicht ist das Kreuzgelenk 24 erkennbar, von dem aus sich zwei Schiebestifte 32 erstrecken, die jeweils einen Wellenstummel bilden. Die Schiebestifte 32 können drehfest in Profilwellen 36 gehalten sein, die in den mittleren und seitlichen Förderschneckenteilen 16, 18 ausgebildet sind. Durch eine passende Außen- und Innenverzahnung der Schiebestifte 32 und der Profilwelle 36 können diese leicht durch Einschieben miteinander verbunden und im Reparaturfall auch leicht wieder herausgenommen werden. Im Ausführungsbeispiel ist der dem mittleren Förderschneckenteil 18 zugeordnete Schiebestift 32 als Wellenstummel fest mit dem mittleren Förderschneckenteil verschweißt. Der mittlere Förderschneckenteil 18 kann auch leicht mit fest angeschweißten Wellenstummeln und daran anhängendem Kreuzgelenk 24 und Schiebestift 32 verbaut werden. Die Antriebkraft zum Antrieb der seitlichen Förderschneckenteile 16 wird über das Kreuzgelenk 24 auf das seitliche Förderschneckenteil 16 übertragen. Während der mittlere Förderschneckenteil 18 ortsfest über den Antrieb 28 gehalten ist, wird das in Fig. 5 gezeigte Ende des seitlichen Förderschneckenteils 16 vom Schiebestift 32 gehalten. An dieser Stelle ist der seitliche Förderschneckenteil 16 also nicht mit dem zugehörigen seitlichen Rahmenteil 4 verbunden. Die Verbindung des seitlichen Förderschneckenteils 16 mit dem zugehörigen seitlichen Rahmenteil 4 erfolgt vielmehr an einer anderen Stelle des seitlichen Rahmenteils 4.

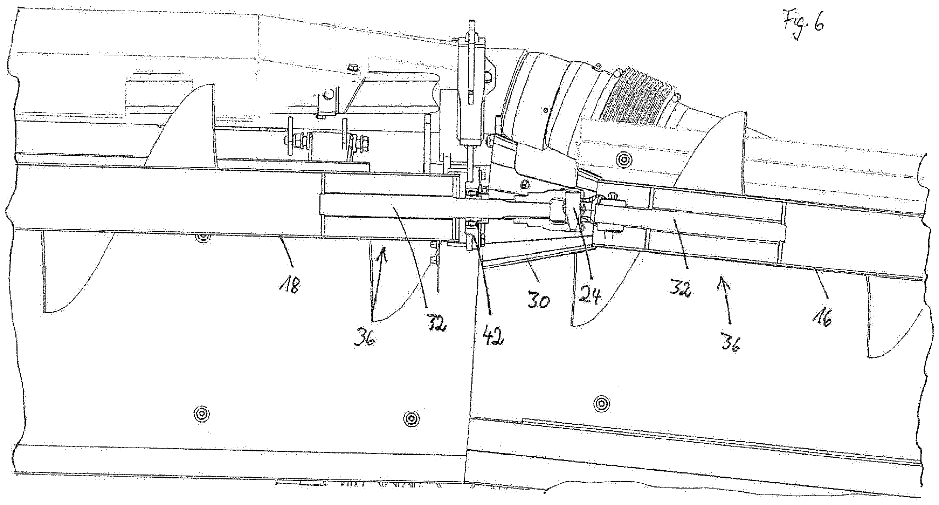

In Fig. 6 ist die konstruktive Ausgestaltung der Kopplung des anderen seitlichen Förderschneckenteils 16 mit dem mittleren Förderschneckenteil 18 dargestellt. Da hier kein Antrieb 28 vorgesehen ist, genügt eine einfache Lagerung des mittleren Förderschneckenteils 18 über ein Lager 42, in das ein Schiebestift 32 eingesteckt ist. Der Schiebestift 32 ist hier wieder über die Profilwelle 36 mit dem mittigen Förderschneckenteil 18 verbunden.

Auf der gegenüberliegenden Seite des Kreuzgelenks 24 befindet sich der zweite Schiebestift 32, der in die Profilwelle 36 des seitlichen Förderschneckenteils 16 eingesteckt ist. Auch hier bildet der Schiebestift 32 die Lagerung für ein Ende des seitlichen Förderschneckenteils 16.

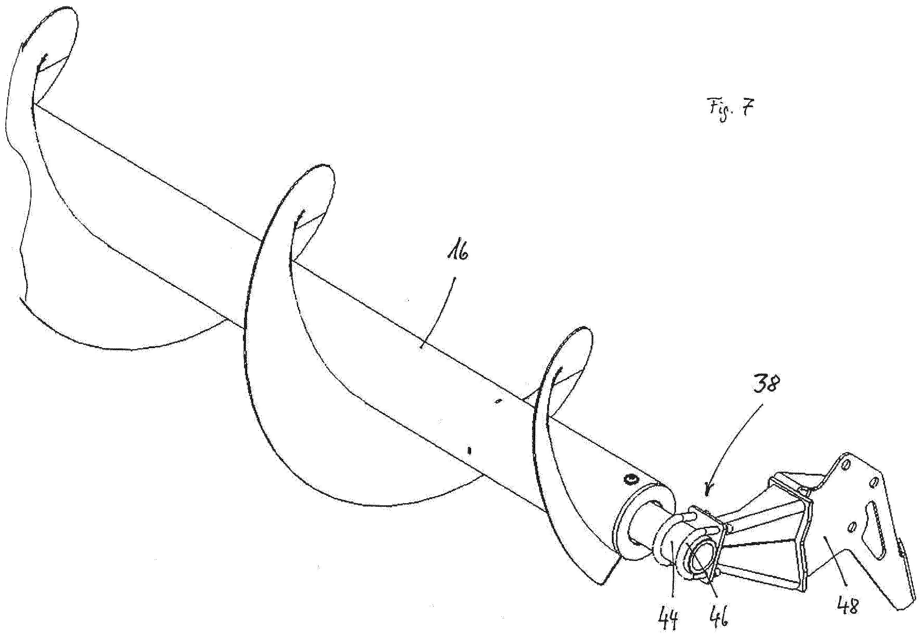

In Fig. 7 ist ein Ausführungsbeispiel gezeigt, wie das dem mittigen Rahmenteil 6 abgewandte Ende eines seitlichen Förderschneckenteils 16 in einer Gleitlagerung 38 gelagert sein kann. Im Ausführungsbeispiel ist der Wellenstummel 44 in eine Kunststoffbuchse eingelegt, die von zwei Tragösen 46 gehalten ist. Die Kunststoffbuchse erlaubt eine Bewegung des Wellenstummels 44 in axialer Richtung wie auch eine rotatorische Bewegung des Wellenstummels 44 in der Kunststoffbuchse, die mit den Tragösen 46 verbunden ist. Die Tragösen 46 sind auf einer Konsole 48 angebracht, die fest mit der Rückwand 20 oder dem seitlichen Rahmenteil 4 verbunden ist.

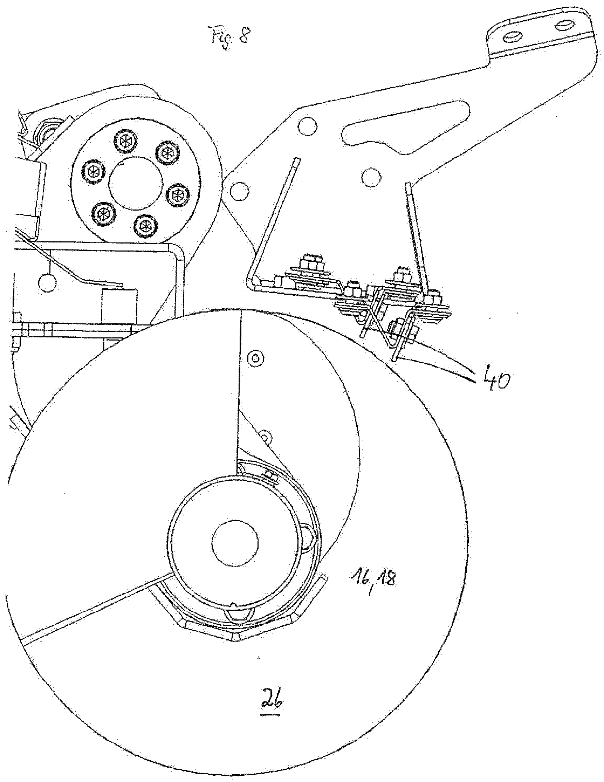

Fig. 8 zeigt eine Schnittansicht auf einen Abstreifer 40. Die beiden Abstreifer 40 sind so angeordnet, dass sie sie in unmittelbarer Nähe zum Hüllkreis der Schneckenbleche 26 befinden.

Die Erfindung ist nicht auf das vorstehende Ausführungsbeispiel beschränkt. Dem Fachmann bereitet es keine Schwierigkeiten, das Ausführungsbeispiel auf eine ihm geeignet erscheinende Weise abzuwandeln, um sie an einen konkreten Anwendungsfall anzupassen.

## Patentansprüche

1. Schneidwerk (2) zum Anbau an einen Mähdrescher mit einem dreiteiligen Rahmen, dessen Rahmenteile (4, 6) gelenkig miteinander verbunden sind, einem Messerbalken (10), einer Haspel (8), einer mittigen Bandfördervorrichtung (14) und seitlichen Bandfördervorrichtungen (12) zum Abfördern des geschnittenen Halmguts, die am Rahmen (4, 6) abgestützt sind, wobei die seitlichen Bandfördervorrichtungen (12) quer zur Vorfahrtrichtung auf die mittige Bandfördervorrichtung (14) zu und die mittige Bandfördervorrichtung (14) entgegen der Vorfahrtrichtung fördern, einer mehrteiligen Rückwand (20) des Schneidwerks (2), die an den Rahmenteilen (4, 6) des Rahmens ausgebildet ist, die sich entlang der Förderstrecke der seitlichen Bandfördervorrichtungen (12) erstreckt und die im Bereich der mittigen Bandfördervorrichtung (14) eine Übergabeöffnung zur Übergabe des Ernteguts an den Mähdrescher aufweist, und Antriebsvorrichtungen zum Antrieb des Messerbalkens (10), der Haspel (8) und der Bandfördervorrichtungen (12, 14), **dadurch gekennzeichnet, dass** im Bereich der Rückwand eine dreiteilige Förderschnecke angeordnet ist, die sich über die Arbeitsbreite des Schneidwerks (2) erstreckt und die oberhalb der mittigen und der seitlichen Bandfördervorrichtungen (12, 14) und zwischen der Haspel (8) und der Rückwand (20) angeordnet ist, wobei die Längenmaße der jeweiligen Teile (16, 18) der Förderschnecke zumindest annähernd den Breitenmaßen der Rahmenteile (6, 8) des Rahmens entsprechen, die Förderschneckenteile (16, 18) von einem gemeinsamen Antrieb angetrieben und die einander angrenzenden Teile (16, 18) der Förderschnecke durch Kreuzgelenke (24) miteinander verbunden sind.

2. Schneidwerk (2) nach Anspruch 1, **dadurch gekennzeichnet, dass** der mittige Teil (18) der Förderschnecke fest mit dem mittigen Rahmenteil (6) verbunden ist.

3. Schneidwerk (2) nach Anspruch 1 oder 2, **dadurch gekennzeichnet, dass** die seitlichen Teile (16) der Förderschnecke an einem Punkt mit dem jeweils zugehörigen Rahmenteil (4, 6) verbunden sind.

4. Schneidwerk (2) nach Anspruch 3, **dadurch gekennzeichnet, dass** die seitlichen Teile (16) der Förderschnecke an ihren äußeren Enden in einer Gleitlagerung (38) als ein Verbindungspunkt mit dem jeweils zugehörigen Rahmenteil (4, 6) verbunden sind, wobei die Gleitlagerung (38) so ausgestaltet ist, dass sie auch eine rotatorische Bewegung des jeweiligen Förderschneckenteils (16, 18) zulässt, und die seitlichen Teile (16) der Förderschnecke an ihrem dem mittigen Rahmenteil (6) zugewandten Ende drehfest mit dem mittigen Teil (18) der Förderschnecke verbunden sind.

5. Schneidwerk (2) nach einem der Ansprüche 2 bis 4, **dadurch gekennzeichnet, dass** an dem jeweiligen Rahmenteil (4, 6) auf den Hüllkreis der Schneckenbleche (26) der Förderschneckenteile (16, 18) hin ausgerichtete Abstreifer (40) angeordnet sind.

6. Schneidwerk (2) nach einem der vorhergehenden Ansprüche, **dadurch gekennzeichnet, dass** der Antrieb (28) der Förderschnecke den mittigen Teil (18) der Förderschnecke antreibt.

7. Schneidwerk (2) nach einem der vorhergehenden Ansprüche, **dadurch gekennzeichnet, dass** die Förderschneckenteile (16, 18) an ihrem jeweiligen Rahmenteil (4, 6) oder der jeweiligen Rückwand (20) befestigt sind.

8. Schneidwerk (2) nach einem der vorhergehenden Ansprüche, **dadurch gekennzeichnet, dass** Schneckenbleche auf einem Abschnitt des mittigen Förderschneckenteils (18) eine größere Steigung aufweisen als Schneckenbleche auf einem Abschnitt der seitlichen Förderschneckenteile.

9. Schneidwerk (2) nach einem der vorhergehenden Ansprüche, **dadurch gekennzeichnet, dass** im Bereich der Kreuzgelenke (24) ein die Kreuzgelenke (24) überdeckender Konus (30) auf die Förderschnecke aufgesetzt ist.

10. Schneidwerk (2) nach einem der vorhergehenden Ansprüche, **dadurch gekennzeichnet, dass** die Förderschneckenteile (16, 18) im Anbindungsbereich zueinander über durch ein Kreuzgelenk (24) miteinander verbundene Wellenstummel drehfest miteinander verbunden sind.

## Claims

1. Mower (2) for attachment to a combine harvester, comprising a three-part frame, the frame parts (4, 6) of which are hingedly interconnected, a cutter bar (10), a reel (8), a central belt conveyor device (14) and lateral belt conveyor devices (12) for conveying the cut stalk material away, which devices are supported on the frame (4, 6), the lateral belt conveyor devices (12) conveying transversely to the direction of travel towards the central belt conveyor device (14) and the central belt conveyor device (14) conveying counter to the direction of travel, a multi-part rear wall (20) of the mower (2) which is formed on the frame parts (4, 6) of the frame, extends along the conveying path of the lateral belt conveyor devices (12) and has a transfer opening in the region of the central belt conveyor device (14) for transferring the crop to the combine harvester, and drive devices for driving the cutter bar (10), the reel (8) and the belt conveyor devices (12, 14), **characterised in that** a three-part screw conveyor is arranged in the region of the rear wall, which conveyor extends across the operating width of the mower (2) and is arranged above the central and the lateral belt conveyor devices (12, 14) and between the reel (8) and the rear wall (20), the length dimensions of the respective parts (16, 18) of the screw conveyor at least approximately corresponding to the width dimensions of the frame parts (6, 8) of the frame, the screw conveyor parts (16, 18) being driven by a common drive and the adjacent parts (16, 18) of the screw conveyor being interconnected by universal joints (24).

2. Mower (2) according to claim 1, **characterised in that** the central part (18) of the screw conveyor is rigidly connected to the central frame part (6).

3. Mower (2) according to either claim 1 or claim 2, **characterised in that** the lateral parts (16) of the screw conveyor are connected at one point to the associated frame part (4, 6).

4. Mower (2) according to claim 3, **characterised in that** the lateral parts (16) of the screw conveyor are connected at their outer ends to the associated frame part (4, 6) in a slide bearing (38) as a connection point, the slide bearing (38) being designed such that it also allows a rotary movement of the particular screw conveyor part (16, 18), and the lateral parts (16) of the screw conveyor being connected, at their end facing the central frame part (6), for conjoint rotation with the central part (18) of the screw conveyor.

5. Mower (2) according to any of claims 2 to 4, **characterised in that** scrapers (40) that are oriented towards the pitch circle of the screw sheets (26) of the screw conveyor parts (16, 18) are arranged on the particular frame part (4, 6).

6. Mower (2) according to any of the preceding claims, **characterised in that** the drive (28) of the screw conveyor drives the central part (18) of the screw conveyor.

7. Mower (2) according to any of the preceding claims, **characterised in that** the screw conveyor parts (16, 18) are fastened to their particular frame part (4, 6) or to the particular rear wall (20).

8. Mower (2) according to any of the preceding claims, **characterised in that** screw sheets on a portion of the central screw conveyor part (18) have a greater pitch than screw sheets on a portion of the lateral screw conveyor parts.

9. Mower (2) according to any of the preceding claims, **characterised in that**, in the region of the universal joints (24), a cone (30) covering the universal joints (24) is placed on the screw conveyor.

10. Mower (2) according to any of the preceding claims, **characterised in that** the screw conveyor parts (16, 18) are interconnected for conjoint rotation in the mutual connection region via shaft stubs interconnected via a universal joint (24).

## Revendications

1. Bloc de coupe (2) destiné à être monté sur une moissonneuse-batteuse comportant un cadre en trois parties, dont les parties de cadre (4, 6) sont reliées entre elles de manière articulée, une barre de coupe (10), un enrouleur (8), un dispositif transporteur à courroie central (14) et des dispositifs transporteurs à courroie latéraux (12) destinés à l'évacuation du fourrage coupé qui sont appuyés sur les cadres (4, 6), les dispositifs transporteurs à courroie latéraux (12) soutenant transversalement à la direction de déplacement sur le dispositif transporteur à courroie central (14) et le dispositif transporteur à courroie central (14) à l'opposé de la direction de déplacement, une paroi arrière comportant plusieurs parties (20) du bloc de coupe (2), qui est formée au niveau des parties de cadre (4, 6) du cadre, qui s'étend le long des lignes de transport des dispositifs transporteurs à courroie latéraux (12) et qui présente dans la zone du dispositif transporteur à courroie central (14) une ouverture de transfert destinée au transfert de la récolte sur la moissonneuse-batteuse, et des dispositifs d'entraînement destinés à l'entraînement de la barre de coupe (10), de l'enrouleur (8) et des dispositifs transporteurs à courroie (12, 14), **caractérisé en ce que** dans la zone de la paroi arrière est montée une vis transporteuse en trois parties, qui s'étend sur la largeur de travail du bloc de coupe (2) et qui est montée au-dessus des dispositifs transporteurs à courroie central et latéral (12, 14) et entre l'enrouleur (8) et la paroi arrière (20), les mesures de longueur des parties respectives (16, 18) de la vis transporteuse correspondant au moins approximativement aux largeurs des parties de cadre (6, 8) du cadre, entraînant les parties de vis transporteuse (16, 18) par un entraînement commun et les autres parties adjacentes (16, 18) de la vis transporteuse étant reliées les unes aux autres par une articulation en croix (24).

2. Bloc de coupe (2) selon la revendication 1, **caractérisé en ce que** la partie centrale (18) de la vis transporteuse est reliée de manière fixe à la partie de cadre centrale (6).

3. Bloc de coupe (2) selon la revendication 1 ou 2, **caractérisé en ce que** les parties latérales (16) de la vis transporteuse sont reliées en un point à la partie de cadre (4, 6) respectivement associée.

4. Bloc de coupe (2) selon la revendication 3, **caractérisé en ce que** les parties latérales (16) de la vis transporteuse sont reliées au niveau de leurs extrémités externes dans un palier lisse (38) comme un point de liaison avec la partie de cadre (4, 6) respectivement associée, le palier lisse (38) étant agencé de manière à permettre également un mouvement de rotation de la partie de vis transporteuse respective (16, 18), et les parties latérales (16) de la vis transporteuse étant reliées fixement au niveau de leur extrémité orientée vers la partie de cadre centrale (6) à la partie centrale (18) de la vis transporteuse.

5. Bloc de coupe (2) selon l'une quelconque des revendications 2 à 4, **caractérisé en ce que** les éléments racleurs (40) orientés vers les parties de vis transporteuse (16, 18) sont montés au niveau de la partie de cadre (4, 6) respective sur le cercle enveloppant des tôles en forme d'escargot (26).

6. Bloc de coupe (2) selon l'une quelconque des revendications précédentes, **caractérisé en ce que** l'entraînement (28) de la vis transporteuse entraîne la partie centrale (18) de la vis transporteuse.

7. Bloc de coupe (2) selon l'une quelconque des revendications précédentes, **caractérisé en ce que** les parties de vis transporteuse (16, 18) sont fixées au niveau de leur partie de cadre (4, 6) respective ou à la paroi arrière (20) respective.

8. Bloc de coupe (2) selon l'une quelconque des revendications précédentes, **caractérisé en ce que** les tôles en forme d'escargot présentent sur un tronçon de la partie de vis transporteuse centrale (18) une inclinaison plus forte que celle des tôles en forme d'escargot sur un tronçon des parties de vis transporteuse latérales.

9. Bloc de coupe (2) selon l'une quelconque des revendications précédentes, **caractérisé en ce que** dans la zone des articulations en croix (24) un cône (30) recouvrant l'articulation en croix (24) est fixé sur la vis transporteuse.

10. Bloc de coupe (2) selon l'une quelconque des revendications précédentes, **caractérisé en ce que** les parties de vis transporteuse (16, 18) sont reliées entre elles fixement dans une zone de liaison par l'intermédiaire d'un tourillon relié entre elles par une articulation en croix (24).
